# EUROPEAN PATENT APPLICATION

(11) **EP 1 959 380 A1**
(43) Date of publication of application: **20.08.2008**
(21) Application number: 08101440.9
(22) Date of filing: 08.02.2008
(51) Int. Cl.: G06Q 10/00

(54) **System and method for providing an importance filter for electronic mail messages**

(30) Priority: 14.02.2007 US 705930
(71) Applicant: Novell, Inc., Provo, Utah 84606-6169 (US)
(72) Inventor: Brown, Jeremy Ray, Orem, UT 84057 (US)
(74) Representative: Hanna, Peter William Derek

(57) **Abstract**

A system and method for implementing an importance filter (120) in an electronic mail message system are described. In one embodiment, the method comprises receiving an incoming email message; rating the received email message in accordance with at least one importance criterion; and responsive to the rating, displaying in the email inbox (400) an entry (402h) corresponding to the received email message in a manner indicative of a result of the rating.

## Description

### BACKGROUND

Electronic mail, or "email", is a store and forward method of composing, sending, storing, and receiving messages over electronic communications systems. Incoming email is typically stored in an electronic "inbox". The ease and reliability with which email messages can be sent has resulted in users being bombarded with such messages in large volumes. Some portion of messages received by a user will be messages that the user either expected to receive or that contain interesting and/or useful information; however, an increasing number of messages received by a user comprise unsolicited bulk email messages, or "spam".

Given the large numbers of email messages that arrive at a user's inbox on a daily basis and the limited amount of time a user has to devote to reading and responding to the messages, a problem has arisen in that it is often difficult to sort through all of the messages to determine the relative importance of the various messages and to attend to the messages that require attention. For example, a user will clearly consider a spam message less deserving of his attention than a message from a friend requesting his presence at a party. Similarly, it is likely that the same user will consider the same email from a friend less deserving of immediate attention than a message from his secretary advising him that his supervisor wants to meet with him as soon as possible. Presently, there is no way, other than to look through every message in his inbox, for a user to quickly determine which messages require immediate attention. The more quickly a user sifts through his messages, the less time he wastes doing so, but the more likely it is that he will miss an important message. On the other hand, the more time a user spends sifting through his messages, the less likely it is that he will miss a message, but the more time he will waste reading messages of little to no importance.

### SUMMARY

The present invention provides a method, system and computer program for implementing an importance filter for an electronic mail ("email") inbox display, in accordance with claims which follow. In an embodiment, the method comprises receiving an incoming email message; rating the received email message in accordance with at least one criterion; and responsive to the rating, displaying in the email inbox an entry corresponding to the received email message in a manner indicative of a result of the rating.

In another embodiment, a system is provided for implementing an importance filter for an electronic mail ("email") inbox display. The system comprises means for rating a received email message in accordance with at least one criterion relating to an importance of the received email message; and means responsive to the rating for displaying in the email inbox an entry corresponding to the received email message in a manner indicative of a result of the rating.

In another embodiment, a computer program product is provided. The computer program product comprises computer readable medium having stored thereon computer-executable instructions for rating a received email message in accordance with at least one criterion relating to an importance of the received email message; and responsive to the rating, displaying in the email inbox an entry corresponding to the received email message in a manner indicative of a result of the rating.

### BRIEF DESCRIPTION OF THE DRAWINGS

Fig. 1 is a block diagram of an Internet email system in which an embodiment may be implemented.

Fig. 2 illustrates a display of an inbox interface of a mail user agent prior to application of importance filtering in accordance with one embodiment.

Fig. 3 illustrates a display of an inbox interface of a mail user agent subsequent to application of importance filtering in accordance with one embodiment.

Fig. 4 illustrates a display of an inbox interface of a mail user agent subsequent to application of importance filtering in accordance with an alternative embodiment.

### DETAILED DESCRIPTION

To better illustrate the advantages and features of the invention, a particular description of several embodiments will be provided with reference to the attached drawings. These drawings, and other embodiments described herein, only illustrate selected aspects of the invention and do not limit the invention's scope. Further, despite reference to specific features illustrated in the example embodiments, it will nevertheless be understood that these features are not essential to all embodiments and no limitation of the scope of the invention is thereby intended. Any alterations and further modifications in the described embodiments, and any further applications of the principles of the invention as described herein are contemplated as would normally occur to one skilled in the art. Furthermore, some items are shown in a simplified form, and inherently include components that are well known in the art. Further still, some items are illustrated as being in direct connection for the sake of simplicity and clarity. Despite the apparent direct connection, it is understood that such illustration does not preclude the existence of intermediate components not otherwise illustrated.

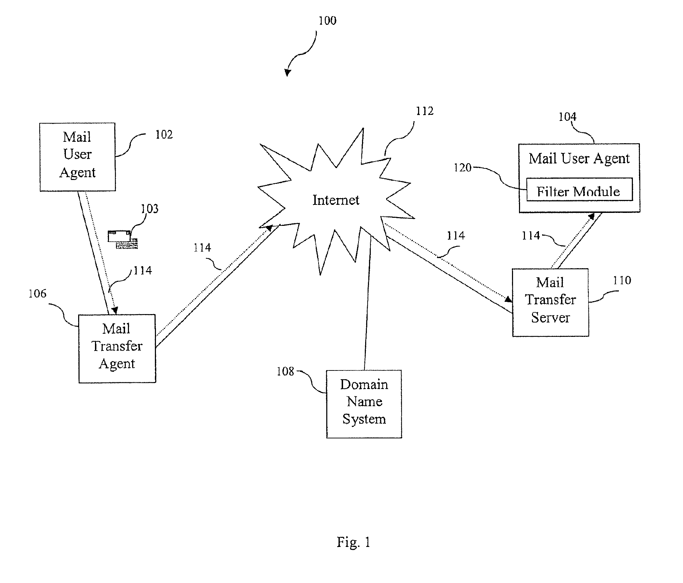

Fig. 1 is a block diagram of an Internet email system 100 for implementing features of an embodiment described herein. In operation, a first mail user agent ("MUA") 102 is used to compose an email message 103 addressed to a second MUA 104. After the message 103 has been composed and sent, a mail transfer agent ("MTA") 106 formats the message and examines the destination address thereof to obtain the domain name. The MTA 106 looks up the domain name in a domain name system ("DNS") 108 to determine a mail exchange server ("MXS") that accepts messages for the indicated domain, in this case, MXS 110. The MTA 106 sends the message 103 to the indicated MXS (MXS 110) via the Internet 112. The MXS 110 then forwards the message 103 on to the second MUA 104, where it may be opened by a user using a suitable user interface. Arrows designated by reference numeral 114 illustrate the path of the message 103 from the MUA 102 to the MUA 104. It will be recognized that, in most cases, hundreds of messages originating from nearly as many MUAs will be received at the MUA 104 each day. A user at the MUA 104 will typically access the messages via an "inbox", which is a graphical user interface for displaying a list of messages received by the MUA 104. In general, messages will remain in the inbox of an MUA until deleted by the user.

In accordance with features of one embodiment, the MUA 104 includes a filter module 120 that enables a user to apply an "importance filter" to each incoming email message based on one or more of a variety of attributes. Such attributes may include, for example, the username of the sender, the domain name of the sender, the subject of the message, the content of the message, and any other discernable attribute of the message and/or the sender. Criteria for determining the relative importance of the incoming email message are user-configurable, e.g., via a graphical user interface. For example, the user may specify that spam messages are always considered to be of lowest importance, while messages from a particular domain name are always considered to be of moderate importance. Additionally, or in the alternative, default criteria may be applied. In one embodiment, the filter module 120 comprises a combination of hardware elements and software instructions executable by the hardware elements for evaluating each incoming message in accordance with the criteria and "rates" the importance of the message in accordance with a relative importance rating scheme. It is anticipated that more than one each incoming message will be based on application of the criteria. It is anticipated that more than one criterion may be applicable to each message.

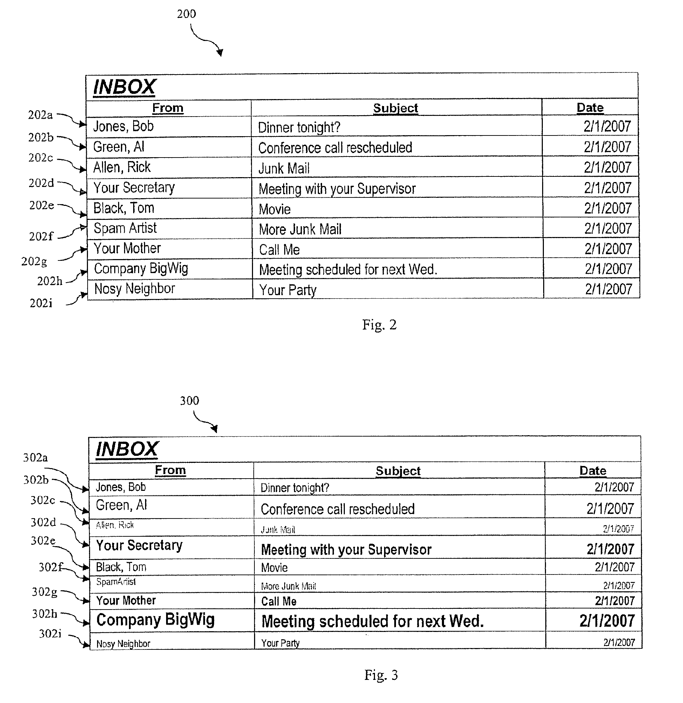

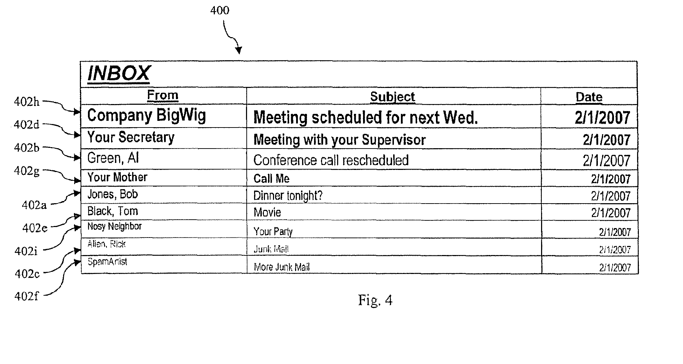

Once the message has been "rated" by the filter module 120 in accordance with the applicable criteria, an entry corresponding to the message is displayed in an inbox interface, as described in greater detail below with reference to Figs. 3 and 4, using visual attributes corresponding to, and dictated by, the rating of the message. A relative importance factor may be applied to each message so that the messages may be divided into groups or categories each rated with the same importance.

It will be recognized that various methods of rating incoming email messages may be employed. In one embodiment, a point based scoring system is employed, in which a message accumulates points based on the various criteria. For example, one point may be awarded to messages originating from a first domain, while two points are awarded to messages originating from a second domain. Additionally, one point may be awarded to a message originating from a first user in the first domain, while two points are awarded to a message originating from a user in a second domain. The resulting "score" of the message corresponds to a predefined set of visual attributes used to represent the message in the inbox interface.

Fig. 2 illustrates a display of an inbox interface 200 of an MUA in which importance filtering as taught herein has not been applied. The inbox interface 200 includes several entries 202a-202i, each corresponds to and contains summary information regarding an email message received by the MUA. In particular, each entry 202a-202i indicates, for the message to which it corresponds, the sender, subject, and date of receipt of the message. The relative importance of the messages to which the entries 202a-202i correspond is not immediately apparent to a user viewing the inbox interface 200; the user must at least read the summary information to ascertain the relative importance thereof.

Fig. 3 illustrates a display of an inbox interface 300 of an MUA in which importance filtering as taught herein has been applied. The inbox interface 300 includes several entries 302a-302i, which correspond to and contain summary information regarding the same email messages as the entries 202a-202i (Fig. 2), respectively. In contrast to the inbox interface 200 shown in Fig. 2, the relative importance of the messages to which the entries 302a-302i correspond is immediately apparent to a user viewing the inbox interface 300 due to the visual cues used in displaying the entries. For example, it is immediately apparent that the message to which the entry 302h corresponds is of greater importance than the message to which the entry 302i corresponds. Specifically, the entry 302h is displayed in boldface type and in a relatively large font, while the entry 302i is displayed in regular type and in a relatively small font. A user's eyes will be automatically drawn to the entry 302h and away from the entry 302i. Similarly, it is apparent that the entry 302a corresponds to a message that is more important than the message to which the entry 302c corresponds, but less important than the message to which the entry 302d corresponds.

Fig. 4 illustrates a display of an inbox interface 400 of an MUA in which importance filtering as taught herein has been applied and the entries are displayed in order of relative importance. The inbox interface 400 includes several entries 402a-402i, which correspond to and contain summary information regarding the same email messages as the entries 202a-202i (Fig. 2), respectively, and entries 302a-302i, respectively. As is apparent from the inbox interface 400 shown in Fig. 4, the message corresponding to the entry 402h is the most important message, followed by the message corresponding to the entry 402d, then the messages corresponding to 402b, 402g, 402a, 402e, 402i, 402c, and 402f, respectively.

It will be recognized that, while differing type styles are employed in the embodiments illustrated in Figs. 3 and 4 to visually convey to a user the relative importance of the various messages, other visual cues, such as color, highlighting, animation, etc., may be used in addition or as alternatives to the type style. As previously noted, the visual cues may be configured by the user. In addition, or in the alternative, default visual cues may be employed.
A visual cue may be assigned to the inbox entry adapted to be more easily or more readily visible in a manner which increases incrementally in intensity with each successive relative importance category, being selected from an increase in font size, a bolder font or other increase in a font attribute, a different colour or an increase in colour brightness, an increase in the movement of an animation.
While the preceding description shows and describes one or more embodiments, it will be understood by those skilled in the art that various changes in form and detail may be made therein without departing from the scope of the present disclosure. For example, various steps of the described methods may be executed in a different order or executed sequentially, combined, further divided, replaced with alternate steps, or removed entirely. In addition, various functions illustrated in the methods or described elsewhere in the disclosure may be combined to provide additional and/or alternate functions.

## Claims

1. A computer-implemented method for providing an importance filter (120) for an electronic mail ("email") inbox display (300,400), the method comprising:
receiving an incoming email message;
rating the received email message in accordance with at least one criterion;
responsive to the rating, displaying in the email inbox an entry (302,402) corresponding to the received email message in a manner indicative of a result of the rating.

2. The method of claim 1 wherein the at least one criterion relates to an importance score of the received email message.

3. The method of claim 1 wherein the at least one criterion is specified by a user.

4. The method of claim 1 wherein the at least one criterion is a default criterion.

5. The method of claim 1 wherein the displaying in the email inbox (300,400) an entry (302,402) corresponding to the received email message in a manner indicative of a result of the rating comprises displaying the corresponding entry using at least one visual cue indicative of a relative importance of the message.

6. The method of claim 5 wherein the at least one visual cue is a visual cue selected from the group consisting of color, font size, font attribute, animation, and highlighting.

7. The method of claim 5 wherein the at least one visual cue comprises a relative position of the entry in the email inbox (300,400).

8. The method of claim 5 wherein the at least one visual cue is specified by a user.

9. The method of any of claims 1 to 8, **characterized in that**
said rating step comprises;
selecting attributes of incoming email messages, the attributes selected from the username of the sender, the domain name of the sender, the subject of the message, the content of the message, and any other discernable attribute of the message and/or the sender,
applying criteria to the attributes so as to configure a relative importance rating scheme for determining a relative importance factor to be assigned to each incoming email message,
ranking each email message into a plurality of categories determined by the relative importance factor,
and said displaying step comprises;
assigning to the inbox entry a visual cue adapted to be more easily or more readily visible in a manner which increases incrementally in intensity with each successive relative importance category, being selected from an increase in font size, a bolder font or other increase in a font attribute, a different colour or an increase in colour brightness, an increase in the movement of an animation.

10. A system for implementing an importance filter for an electronic mail ("email") inbox display (300,400), the system comprising:
means (120) for rating a received email message in accordance with at least one criterion relating to an importance of the received email message;
means responsive to the rating for displaying in the email inbox an entry (302,402) corresponding to the received email message in a manner indicative of a result of the rating.

11. The system of claim 10, wherein the at least one criterion is specified by a user.

12. The system of claim 10, wherein the at least one criterion is a default criterion.

13. The system of claim 10, wherein the means for displaying in the email inbox (300,400) an entry (302,402) corresponding to the received email message in a manner indicative of a result of the rating comprises means for displaying the corresponding entry using at least one visual cue indicative of a relative importance of the message.

14. The system of claim 13, wherein the at least one visual cue is a visual cue selected from the group consisting of color, font size, font attribute, animation, and highlighting.

15. The system of claim 14, wherein the at least one visual cue further comprises a relative position of the entry in the email inbox (300,400).

16. The system of claim 13, wherein the at least one visual cue is specified by a user.

17. The system of any of claims 10 to 16, **characterized in that**
said rating means comprises;
means for selecting attributes of incoming email messages, the attributes selected from the username of the sender, the domain name of the sender, the subject of the message, the content of the message, and any other discernable attribute of the message and/or the sender,
means for applying criteria to the attributes so as to configure a relative importance rating scheme for determining a relative importance factor to be assigned to each incoming email message,
means for ranking each email message into a plurality of categories determined by the relative importance factor,
and said displaying means comprises;
means for assigning to the inbox entry a visual cue adapted to be more easily or more readily visible in a manner which increases incrementally in intensity with each successive relative importance category, being selected from an increase in font size, a bolder font or other increase in a font attribute, a different colour or an increase in colour brightness, an increase in the movement of an animation.

18. A computer program which when executing on a computer performs the steps of claims 1 to 9.

19. The computer program of claim 18, stored on a computer-readable medium.

## Amended claims

### Amended claims in accordance with Rule 137(2) EPC.

**1.** A computer-implemented method for providing an importance filter (120) for an electronic mail ("email") inbox display (300,400), the method comprising:
receiving an incoming email message;
rating the received email message in accordance with at least one criterion;
**characterized by**, responsive to the rating, displaying in the email inbox an entry (302,402) corresponding to the received email message in a manner indicative of a result of the rating, using at least one user -selectable visual cue indicative of a relative importance of the message;
wherein the at least one visual cue is a visual cue selected from the group consisting of color, relative font size, font attribute, animation, and highlighting.

**2.** The method of claim 1 wherein the at least one criterion relates to an importance score of the received email message.

**3.** The method of claim 1 wherein the at least one criterion is specified by a user.

**4.** The method of claim 1 wherein the at least one criterion is a default criterion.

**5.** The method of any of claims 1 to 4, **characterized in that** said rating step comprises;
selecting attributes of incoming email messages, the attributes selected from the usemame of the sender, the domain name of the sender, the subject of the message, the content of the message, and any other discernable attribute of the message and/or the sender,
applying criteria to the attributes so as to configure a relative importance rating scheme for determining a relative importance factor to be assigned to each incoming email message,
ranking each email message into a plurality of categories determined by the relative importance factor,
and said displaying step comprises;
assigning to the inbox entry a visual cue adapted to be more easily or more readily visible in a manner which increases incrementally in intensity with each successive relative importance category, being selected from an increase in font size, a bolder font or other increase in a font attribute, a different colour or an increase in colour brightness, an increase in the movement of an animation.

**6.** A system for implementing an importance filter for an electronic mail ("email") inbox display (300,400), the system comprising:
means (120) for rating a received email message in accordance with at least one criterion relating to an importance of the received email message;
**characterized by** means responsive to the rating for displaying in the email inbox an entry (302,402) corresponding to the received email message in a manner indicative of a result of the rating using at least one user - selectable visual cue indicative of a relative importance of the message;
wherein the at least one visual cue is a visual cue selected from the group consisting of color, relative font size, font attribute, animation, and highlighting.

**7.** The system of claim 6, wherein the at least one criterion is specified by a user.

**8.** The system of claim 6, wherein the at least one criterion is a default criterion.

**9.** The system of any of claims 6 to 8, **characterized in that** said rating means comprises;
means for selecting attributes of incoming email messages, the attributes selected from the usemame of the sender, the domain name of the sender, the subject of the message, the content of the message, and any other discernable attribute of the message and/or the sender,
means for applying criteria to the attributes so as to configure a relative importance rating scheme for determining a relative importance factor to be assigned to each incoming email message,
means for ranking each email message into a plurality of categories determined by the relative importance factor,
and said displaying means comprises;
means for assigning to the inbox entry a visual cue adapted to be more easily or more readily visible in a manner which increases incrementally in intensity with each successive relative importance category, being selected from an increase in font size, a bolder font or other increase in a font attribute, a different colour or an increase in colour brightness, an increase in the movement of an animation.

**10.** A computer program which when executing on a computer performs the steps of claims 1 to 5.

**11.** The computer program of claim 10, stored on a computer-readable medium.
